# EUROPÄISCHE PATENTSCHRIFT

(11) **EP 0 772 537 B1**
(45) Veröffentlichungstag und Bekanntmachung des Hinweises auf die Patenterteilung: **23.02.2000**
(21) Anmeldenummer: 96909058.8
(22) Anmeldetag: 17.04.1996
(51) Int. Cl.: B60S 1/08

(54) **VORRICHTUNG ZUM BETREIBEN EINES SCHEIBENWISCHERS**
DEVICE FOR OPERATING A WINDSCREEN WIPER
DISPOSITIF POUR ACTIONNER UN ESSUIE-GLACE

(30) Priorität: 27.05.1995 DE 19519566
(43) Veröffentlichungstag der Anmeldung: 14.05.1997
(73) Patentinhaber: ROBERT BOSCH GMBH, 70442 Stuttgart (DE)
(72) Erfinder: PIENTKA, Rainer, D-77855 Achern (DE); BLITZKE, Henry, D-77815 Bühl (DE); BÜRKLE, Jörg, D-77654 Offenburg (DE)
(86) Internationale Anmeldenummer: DE9600669
(87) Internationale Veröffentlichungsnummer: WO9637389

(56) Entgegenhaltungen:
- EP-A- 0 438 633
- WO-A-89/00119
- WO-A-90/08680
- DE-A- 4 334 381
- PATENT ABSTRACTS OF JAPAN vol. 014, no. 247 (M-0978), 25.Mai 1990 & JP,A,02 068249 (HONDA MOTOR CO LTD ET AL), 7.März 1990,

## Beschreibung

### Stand der Technik

Die Erfindung bezieht sich auf eine Vorrichtung zum Betreiben eines Scheibenwischers mit einer Sensoreinrichtung zum Erfassen des Benetzungszustandes einer Scheibe mit einer das Sensorsignal aufnehmenden Auswerteeinrichtung, die eine Signalverarbeitungseinrichtung, eine Auslösestufe für den Wischbetrieb und eine Steuersignalerzeugungseinrichtung aufweist, und mit einer Anteuereinheit für den Scheibenwischer, die von der Auswerteeinrichtung zum Erzeugen eines Wischvorgangs ansteuerbar ist.

Eine Vorrichtung dieser Art ist in der EP-B1-360 832, oder in der entsprechenden WO-A1-89 00119, als bekannt ausgewiesen. Hierbei wird ein geeigneter Wischbetrieb automatisch ausgelöst, wenn in dem Sensorsignal bestimmte Auslösungskriterien erkannt werden. Schnell trocknende Wasserschlieren auf der Scheibe, die zum Beispiel von beschädigten Wischerblättern herrühren und bei denen ein Wischbetrieb ungünstig ist, werden dabei allenfalls unzuverlässig erkannt, so daß es zu unerwünschten Wischvorgängen kommen kann.

### Vorteile der Erfindung

Der Erfindung liegt die Aufgabe zugrunde, eine Vorrichtung der eingangs genannten Art so weiterzubilden, daß unnötige Wischvorgänge zuverlässig vermieden werden.

Diese Aufgabe wird bei einer gattungsgemäßen Vorrichtung mit den im Patentanspruch 1 angegebenen Merkmalen gelöst.

Hiernach ist also vorgesehen, daß die Auswerteeinrichtung eine Erkennungsstufe für auf der Scheibe vorhandene trocknende Feuchtigkeit aufweist, mit der aus einer zeitlichen Abfolge von aus dem Sensorsignal gewonnenen Meßwerten ein infolge des Trocknungsvorgangs anwachsender Pegel der Meßwerte feststellbar ist.

Mit diesen Maßnahmen wird eine Phase trocknender Feuchtigkeit auf der Scheibe, wie sie zum Beispiel bei einer Schlierenbildung durch abgenutzte Scheibenwischer vorkommt, sicher erkannt, so daß in dieser Phase ein Wischvorgang von der Auswerteeinrichtung unterdrückt werden kann. Dadurch wird ein unnötiges Trockenwischen vermieden, da derartige Feuchtigkeitsreste in der Regel von selbst schnell abtrocknen.

Eine einfache, zuverlässig arbeitende Ausbildung der Vorrichtung besteht darin, daß die Erkennungsstufe einen Differenzbildner zum Erfassen der Differenz zwischen dem aktuellen Meßwert und einem vorhergehenden Meßwert sowie eine Addierstufe zum Bilden der Summen der vorzeichenbehafteten aufeinanderfolgenden Differenzen aufweist und daß die trocknende Feuchtigkeit erkennbar ist, indem festgestellt wird, ob die Summe eine vorgegebene Schwelle überschreitet.

Hierbei ist ein einfacher Aufbau derart, daß die Summierstufe mittels eines Summenregisters gebildet ist, das einen oberen und einen unteren Grenzwert aufweist, die bei der Addition nicht über- oder unterschritten werden, daß die Schwelle innerhalb der Grenzwerte liegt und daß beim Start der Vorrichtung die Summe in der Nähe der Schwelle als Startwert eingestellt ist.

Weist die Schwelle eine Hysterese auf, so werden Störungen, die Schwankungen um den Schwellenbereich verursachen können, sicher unterdrückt.

Ist vorgesehen, daß die Auslösestufe einen Differenzauslöser aufweist, der bei Erkennen einer Phase trocknender Feuchtigkeit inaktiv schaltbar ist, so wird ein Wischbetrieb in einer solchen Phase trotz Überschreitens der Auslöseschwelle im Differenzbetrieb, daß heißt, wenn die Differenz des Signalpegels gegenüber einem vorgegebenen Referenzwert eine vorbestimmte Größe überschreitet, sicher vermieden.

Die Erfindung wird nachfolgend anhand eines Ausführungsbeispiels unter Bezugnahme auf die Zeichnungen näher erläutert. Es zeigen:
- Fig. 1: eine schematische Blockdarstellung einer Vorrichtung zum automatischen Betreiben eines Scheibenwischers,
- Fig. 2: den Verlauf eines Sensorsignals über der Zeit während einer Trockungsphase und
- Fig. 3: Untergruppen einer in Figur 1 gezeigten Auswerteeinrichtung in Blockdarstellung.

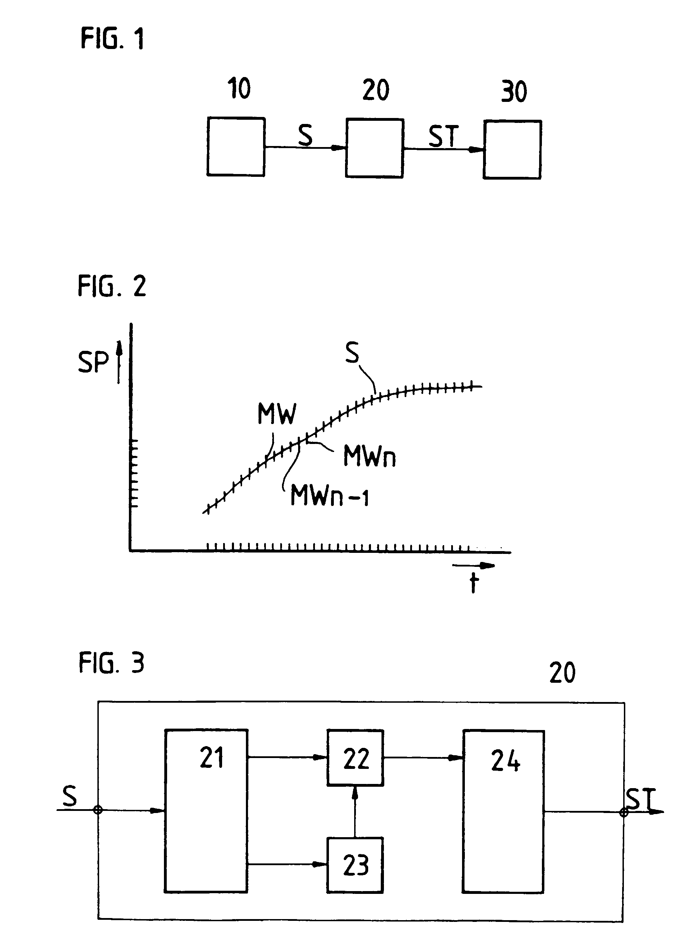

Die Figur 1 zeigt eine Vorrichtung zum automatischen Betreiben eines Scheibenwischers mit einer Sensoreinrichtung 10, die ein Sensorsignal S an eine Auswerteeinrichtung 20 abgibt. Das Sensorsignal S kann schon aufbereitet sein und in der Auswerteeinrichtung weiterverarbeitet werden, um ein Steuersignal ST an eine Ansteuereinheit 30 zu liefern, über die ein nicht gezeigter Scheibenwischer betrieben wird.

Der Pegel des Sensorsignals S ändert sich entsprechend dem Benetzungszustand der Scheibe, so daß daraus ein an die äußeren Bedingungen angepaßter geeigneter Wischbetrieb mittels der Auswerteeinrichtung 20 herleitbar ist. Beispielsweise wird bei Regen oder Schnee der Pegel des Sensorsignals 20 gegenüber einem Referenzwert so weit herabgesetzt, daß eine Auslöseschwelle unterschritten (bzw. eine Differenz gegenüber dem Referenzwert überschritten) wird, die zu einer Auslösung des Wischbetriebs führt.

Im Laufe des Wischbetriebs kann es vorkommen, daß beispielsweise infolge schlechter Wischerblätter Feuchtigkeitsreste auf der Scheibe verteilt werden, die den Pegel SP des Sensorsignals S unter die Auslöseschwelle herabsetzen. Derartige Feuchtigkeitsreste, zum Beispiel Schlieren, trocknen jedoch relativ rasch, so daß ein Wischbetrieb in dieser Phase ungeeignet ist und ein unnötiger Trockenwischvorgang hervorgerufen werden kann. Mit den im folgenden beschriebenen Maßnahmen wird eine solche Phase trocknender Feuchtigkeit sicher erkannt.

In Figur 2 ist beispielsweise ein Ausschnitt des Sensorsignals S während eines Trockungsvorgangs über der Zeit t dargestellt. Wegen des Trockungsvorganges steigt der Signalpegel SP ziemlich rasch stetig an. Von dem Signal werden mittels der Auswerteeinrichtung 20 Meßwerte MW, MWₙ₋₁ gewonnen, wozu die Auswerteeinrichtung 20 eine Signalverarbeitungseinrichtung 21 aufweist. Die Meßwerte MW werden einer Auslösestufe 22 zugeführt, die zum Beispiel eine Differenzauslösestufe umfaßt, die ihrerseits Daten an eine Steuersignalerzeugungseinrichtung 24 zum Erzeugen des Steuersignals ST weitergibt. Die Meßwerte MW werden ferner einer Erkennungsstufe 23 zugeführt, mit der eine Phase trocknender Feuchtigkeit feststellbar ist. Hierzu weist die Erkennungsstufe 23 einen Differenzbildner zum Erfassen der Differenz zwischen dem aktuellen Meßwert MWₙ und einem vorhergehenden Meßwert MWₙ₋₁ sowie eine Addierstufe zum Bilden der Summen der vorzeichenbehafteten aufeinanderfolgenden Differenzen auf. Die trocknende Feuchtigkeit wird erkannt, indem mittels eines Vergleichers festgestellt wird, ob die Summe eine vorgegebene Schwelle überschreitet.

Die Summierstufe ist hierbei mittels eines Summenregisters gebildet, das einen oberen und einen unteren Grenzwert aufweist, die bei der Addition nicht über- oder unterschritten werden. Die Schwelle liegt zwischen den beiden Grenzwerten und weist zum Unterdrücken von Störungen, die fehlerhafte Angaben hervorrufen könnten, eine Hysterese auf.

Die Meßwerte werden zum Beispiel alle 5 ms erfaßt und die entsprechenden Differenzen und Summen werden unmittelbar gebildet, so daß innerhalb sehr kurzer Zeit, zum Beispiel 20 ms, erkannt wird, ob eine Phase trocknender Feuchtigkeit vorliegt und eine Auslösung des Wischbetriebs zu unterdrücken ist. Wird eine solche Trockungsphase erkannt, so wird der Differenzauslöser inaktiv geschaltet, so daß ein Wischbetrieb infolge einer Differenzauslösung sicher unterdrückt wird.

Beim Start der Vorrichtung wird eine Summe vorgegeben, die vorzugsweise in der Nähe der Schwelle liegt. Bei einem Benetzungsereignis wird dann zunächst das Sensrosignal herabgesetzt, so daß bei Unterschreiten der Auslöseschwelle durch den Differenzauslöser ein Wischbetrieb ausgelöst wird. Ist der Benetzungsvorgang beendet, so können durch schlechte Wischerblätter gebildete Schlieren weiterhin einen Feuchtigkeitszustand hervorrufen, durch den der Signalpegel SP unter die Auslöseschwelle herabgesetzt wird. Infolge des Trokkungsvorgangs nimmt nun der Signalpegel relativ kontinuierlich zu, so daß durch die Addition der Differenzen der Meßwerte MW die Schwelle zum Erkennen der Trocknungsphase innerhalb relativ kurzer Zeit überschritten und in dieser Phase ein Wischbetrieb infolge Differenzauslösung gesperrt wird.

Die erfindungsgemäßen Maßnahmen ermöglichen es somit, unnötige Wischvorgänge zu unterdrücken.

## Patentansprüche

1. Vorrichtung zum Betreiben eines Scheibenwischers mit einer Sensoreinrichtung (10) zum Erfassen des Benetzungszustandes einer Scheibe mit einer das Sensorsignal aufnehmenden Auswerteeinrichtung (20), die eine Signalverarbeitungseinrichtung (21), eine Auslösestufe (22) für den Wischbetrieb und eine Steuersignalerzeugungseinrichtung (24) aufweist, und mit einer Ansteuereinheit (30) für den Scheibenwischer, die von der Auswerteeinrichtung (20) zum Erzeugen eines Wischvorgangs ansteuerbar ist, wobei
die Auswerteeinrichtung (20) eine Erkennungsstufe (23) für auf der Scheibe vorhandene trocknende Feuchtigkeit aufweist, mit der aus einer zeitlichen Abfolge von aus dem Sensorsignal (S) gewonnenen Meßwerten (MW) ein infolge des Trocknungsvorgangs sich in einer vorbestimmten Richtung veränderbarer Pegel (SP) der Meßwerte (MW) feststellbar ist und wobei
die Erkennungsstufe (23) einen Differenzbildner zum Erfassen der Differenz zwischen dem aktuellen Meßwert (MWₙ) und einem vorhergehenden Meßwert (MWₙ₋₁) aufweist, dadurch gekennzeichnet daß die Erkennungsstufe (23) ferner eine Addierstufe zum Bilden der Summen der vorzeichenbehafteten aufeinanderfolgenden Differenzen aufweist und daß die trocknende Feuchtigkeit erkennbar ist, indem festgestellt wird, ob bei anwachsendem Pegel (SP) die Summe eine vorgegebene Schwelle überschreitet.

2. Vorrichtung nach Anspruch 1
dadurch gekennzeichnet,
daß die Addierstufe mittels eines Summenregisters gebildet ist, das einen oberen und einen unteren Grenzwert aufweist, die bei der Addition nicht über- oder unterschritten werden,
daß die Schwelle innerhalb der Grenzwerte liegt und
daß beim Start der Vorrichtung die Summe in der Nähe der Schwelle als Startwert eingestellt ist.

3. Vorrichtung nach Anspruch 2,
dadurch gekennzeichnet,
daß die Schwelle eine Hysterese aufweist.

4. Vorrichtung nach einem der vorhergehenden Ansprüche,
dadurch gekennzeichnet,
daß die Auslösestufe (22) einen Differenzauslöser aufweist, der bei Erkennen einer Phase trocknender Feuchtigkeit inaktiv schaltbar ist.

## Claims

1. Device for operating a windscreen wiper, with a sensor means (10) for detecting the state of wetting of a windscreen, with an evaluation means (20) which receives the sensor signal and which has a signalprocessing means (21), a trigger stage (22) for the wiping mode and a control-signal generating means (24), and with an activation unit (30) for the windscreen wiper, the said activation unit being capable of being activated by the evaluation means (20) in order to generate a wiping operation, the evaluation means (20) having a recognition stage (23) for drying moisture present on the windscreen, by means of which recognition stage it is possible to determine, from a time sequence of measured values (MW) obtained from the sensor signal (S), a level (SP) of the measured values (MW) which is variable in a predetermined direction as a result of the drying process, and the recognition stage (23) having a difference former for detecting the difference between the current measured value (MWₙ) and a previous measured value (MWₙ₋₁), characterized in that the recognition stage (23) has, furthermore, an adding stage for forming the sums of the signed successive differences, and in that the drying moisture can be recognized by determining whether, in the case of a rising level (SP), the sum exceeds a predetermined threshold.

2. Device according to Claim 1, characterized in that the adding stage is formed by means of a sum register having an upper and a lower limit value which the addition does not exceed or fall below, in that the threshold is within the limit values, and in that, when the device is started, the sum is set in the vicinity of the threshold as a starting value.

3. Device according to Claim 2, characterized in that the threshold has a hysteresis.

4. Device according to one of the preceding claims, characterized in that the trigger stage (22) has a difference trigger which is capable of being switched to inactive when a phase of drying moisture is recognized.

## Revendications

1. Dispositif servant à faire fonctionner un essuie-glace comprenant :
- un système de détection (10) détectant l'état d'humidification d'une glace,
- un système d'exploitation (20) qui reçoit le signal de détection et qui présente un système de retraitement des signaux (21), un étage de déclenchement (22) du fonctionnement de l'essuie-glace et un système de production de signaux de commande (24), et
- une unité de commande (30) de l'essuie-glace commandée par le système d'exploitation (20) pour produire un processus d'essuyage,
dans lequel
- le système d'exploitation (20) présente un étage de détection (23) de l'humidité en train de sécher sur la glace,
- à partir d'une suite dans le temps, de valeurs de mesure (MW) obtenues à partir du signal de détection (S) cet étage détermine un niveau (SP) des valeurs de mesure (MW) qui se modifie dans un sens déterminé par suite du processus de séchage,
- l'étage de détection (23) comporte un organe de différence pour saisir la différence entre la valeur actuelle (MWₙ) et une valeur antérieure (MWₙ₋₁),
caractérisé en ce que
- l'étage de détection (23) comprend en outre un étage additionneur pour former la somme des différences successives munies d'un signe algébrique et
- on détecte l'humidité en train de sécher en déterminant si, pour un niveau (SP) croissant, la somme dépasse un seuil prédéterminé.

2. Dispositif selon la revendication 1,
caractérisé en ce que
- l'étage d'addition est formé d'un registre de sommation avec une valeur limite supérieure et une valeur limite inférieure qui ne sont pas dépassées ni vers le haut ni vers le bas lors de l'addition,
- le seuil se situe à l'intérieur des valeurs limites et
- au démarrage du dispositif, la somme est fixée comme valeur de départ au voisinage du seuil.

3. Dispositif selon la revendication 2,
caractérisé en ce que
le seuil présente une hystérésis.

4. Dispositif selon l'une des revendications précédentes,
caractérisé en ce que
l'étage de déclenchement (2) présente un déclencheur de différence qui est mis au repos lors de la détection d'une phase d'humidité en cours de séchage.
